# EUROPEAN PATENT APPLICATION

(11) **EP 4 027 608 A1**
(43) Date of publication of application: **13.07.2022**
(21) Application number: 21165471.0
(22) Date of filing: 29.03.2021
(51) Int. Cl.: H04L 29/12, H04L 12/26, H04L 29/08

(54) **A SYSTEM AND METHOD FOR TRANSMITTING DATA USING DNS PROTOCOL**

(30) Priority: 08.01.2021 EP 21150809
(71) Applicant: Advanced Digital Broadcast S.A., 1293 Bellevue (CH)
(72) Inventor: CZYZEWSKI, Wiktor, 65-119 Zielona Gora (PL)
(74) Representative: Kancelaria Eupatent.pl Sp. z.o.o

(57) **Abstract**

A system for transmitting data using a DNS (Domain Name System) protocol, the system comprising: at least one client device (121); a data collection server (122) associated with a data collection domain name; and a data collection database (123). The client device (121) comprises: at least one device module (230); and a device controller (220) configured to: generate (11) data corresponding to the device module (230) in a form of a data string; form (12) a data collection DNS query in a form of a domain name string that contains the data string followed by a data collection domain name; and send (13) the data collection DNS query to the network controller (210). The data collection server (122) is configured to: receive (14) the data collection DNS query; and extract (15) the data string from the DNS query domain name string.

## Description

### TECHNICAL FIELD

The present invention relates to transmitting data using a Domain Name System (DNS) protocol.

### BACKGROUND

A Domain Name System (DNS) is a hierarchical and decentralized naming system for computers connected to the Internet or a private network. A DNS server translates memorized domain names to a numerical IP (Internet Protocol) addresses.

In a typical application, a computer device connected to a network has defined at least one IP address of a DNS server. When the computer device intends to communicate with a computer having a particular domain name, it sends a request to the IP address of the domain server, the request containing the domain name (such as www.adbglobal.com) and receives from the DNS server an IP address that is associated by the server with that domain name (such as 123.123.123.123).

In various devices, there is a need to frequently send short pieces of data to a server. For example, a thermometer device may be configured to send the currently measured temperature in short intervals to a remote server. Typically, this type of data is sent via a dedicated protocol to the server. Such protocol typically requires special format of messages, which often includes a header which may be considerably longer than the actual payload conveying the data to be sent to the server. In a typical scenario, the device will first ask the DNS server to resolve the domain address of the data collecting server via the DNS protocol message and then send the data to the data collecting server via another protocol, such as TCP/IP via the special message. This requires transmission of relatively large amount of data as compared to the actual data. Consequently, power processing and bandwidth resources are not used optimally. This can have a significant importance for battery-operated devices or for networks wherein lots of devices transmit data to the data collecting server.

### SUMMARY

There is a need to improve transmission of short data such as to reduce the use of resources necessary to transmit the data.

The invention relates to a system for transmitting data using a DNS (Domain Name System) protocol, the system comprising: at least one client device; a data collection server associated with a data collection domain name; a data collection database. The client device comprises: at least one device module; a device controller configured to: generate data corresponding to the device module in a form of a data string; form a data collection DNS query in a form of a domain name string that contains the data string followed by a data collection domain name; send the data collection DNS query to the network controller. The data collection server is configured to: receive the data collection DNS query; extract the data string from the DNS query domain name string.

Preferably, the system further comprises a data collection database, wherein the data collection server is further configured to send the data string and an identifier of the client device to the data collection database.

Preferably, the data collection server is further configured to: form an IP address response depending on the content of the data string; send the IP address response to the client device.

Preferably, the data collection server is configured to form an IP address response of at least one of the following types: an acknowledgement and a command.

Preferably, the IP address response type is defined by the values of the IP address.

Preferably, the device controller of the client device is further configured to receive the IP address response, extract response data from the IP address response and perform an action depending on the extracted response data.

Preferably, the step of forming the DNS query comprises encrypting the data to be sent and providing the encrypted data as the data string, and the step of extracting the data string comprises decrypting of the data string.

The invention also relates to a method for transmitting data between a client device and a data collection server having an IP (Internet Protocol) address, the method comprising: at the client device : generating data corresponding to a device module in a form of a data string; forming a data collection DNS query in a form of a domain name string that contains the data string followed by a data collection domain name; sending the data collection DNS query to the network controller; at the data collection server associated with the data collection domain name: receiving the data collection DNS query; extracting the data string from the DNS query domain name string.

Preferably, the method further comprises, at the data collection server, sending the data string and an identifier of the client device to a data collection database.

Preferably, the method further comprises, at the data collection server, forming an IP address response depending on the content of the data string and sending the IP address response to the client device.

Preferably, the step of forming the DNS query comprises encrypting the data to be sent and providing the encrypted data as the data string, and the step of extracting the data string comprises decrypting of the data string.

### BRIEF DESCRIPTION OF DRAWINGS

The present invention will be shown by means of example embodiments on a drawing, wherein:
Fig. 1 shows a first embodiment of a system for collecting data;
Fig. 2 shows a second embodiment of a system for collecting data;
Fig. 3 shows schematically operation of devices in the system for collecting data;
Fig. 4 shows schematically an overall structure of the client device or the server device.
Fig. 5 shows schematically a functional structure of the client device.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

### DETAILED DESCRIPTION

According to the invention, data is transmitted via DNS messages. A client device sends a DNS query that contains the collection data and a domain name of the data collecting server. The data collecting server is configured as a DNS server, receives the DNS query and sends a response in a form of an IP address (e.g. IPv4 or IPv6 address) that may contain simply acknowledgement of receipt of the data or response data.

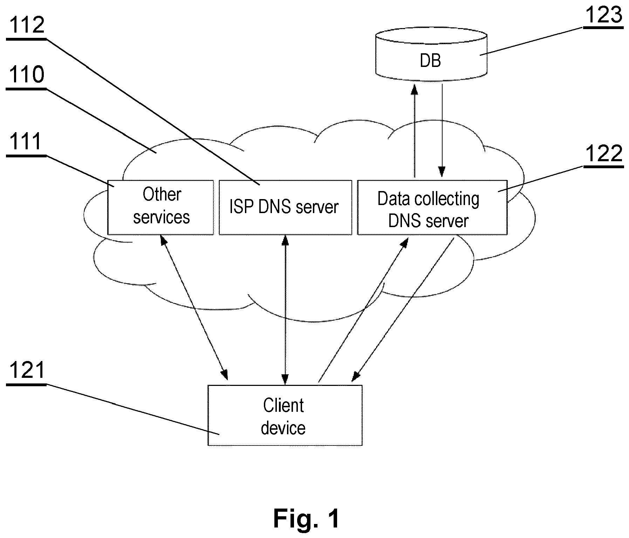

A first embodiment of the system for collecting data is shown in Fig. 1.

The system comprises at least one client device 121 that is configured to generate data and transmit the data to the data collecting server 122. The client device 121 is any device, the data of which is of interest to the data collecting server 122.

In a simple scenario, the client device 121 can be an Internet of Things device, such as a sensor that measures environmental data, for example temperature. The sensor may be configured to generate data corresponding to the currently measured temperature and send it to the data collecting server 122 in regular intervals, e.g. once every second, and/or irregular intervals, i.e. when the temperature changes over a threshold or changes more than a threshold.

Alternatively, the client device 121 may be a smartphone with embedded GPS sensor that measures current position of the device 121. The smartphone may be configured to send its position to the data collecting server 122.

Alternatively, the client device 121 may be a digital television decoder that may be configured to send information about the currently watched television program to the data collecting server 122 in regular intervals, e.g. once every minute, and/or irregular intervals, e.g. each time the program is changed.

In general, data generated by the client device 121 corresponds to any data generated within the client device 121 either by device sensors explicitly configured to generate specific measurement data or simply data related to current state of any component of the device.

The system may comprise a plurality, even thousands, of client devices 121 from which data is to be collected by the data collection server 122.

In order to limit the resources necessary to transmit the data to the data collecting server 122, the DNS protocol is used within the scope of the present invention. The data collecting server 122 is configured as a DNS server and the client device 121 is configured such that the data collecting server IP address is specified as a DNS server address for handling communication. For example, the client device may have two DNS addresses specified:
- a first DNS server, e.g. having an IP address 8.8.8.8, which is a general ISP (Internet Service Provider) DNS server 112 configured to resolve IP addresses for general communication over the network 110, e.g. for communicating with any other network service 111;
- a second DNS server, e.g. with an IP address 6.6.6.6, which is the data collecting server 122, configured to collect data from the client device 121 using the DNS protocol.

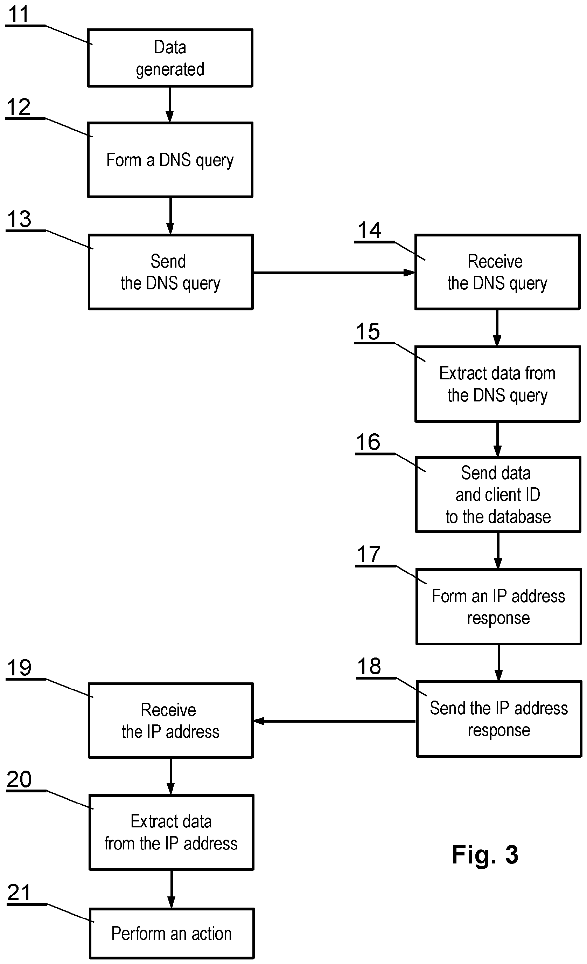

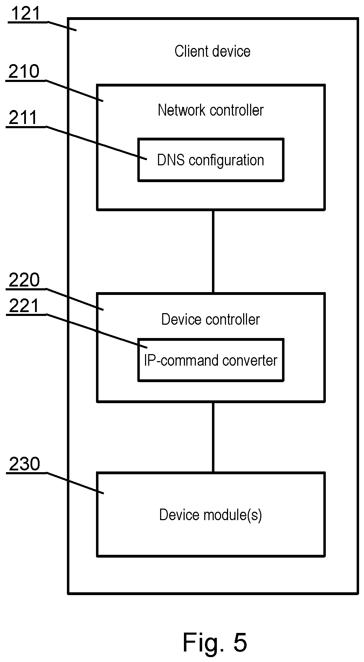

The client device 121 has a structure schematically shown in Fig. 5. It comprises a network controller 210 with a DNS configuration module 211 that stores IP addresses of the DNS servers 112, 122. Namely, the IP address of the data collection server 122 is configured as a DNS server for that network controller 210. The client device 121 further comprises at least one device module 230, such as a temperature sensor, a GPS sensor, a tv programs controller or any other module for which data is to be collected. The client device further comprises a main device controller 220 that is configured to perform the steps of the method as shown in fig. 3. The device controller 220 may contain an IP address to command converter 221, in case the system is configured such that the data collection server may send commands to the client device, e.g. a command to execute a low power operation mode or to provide additional information.

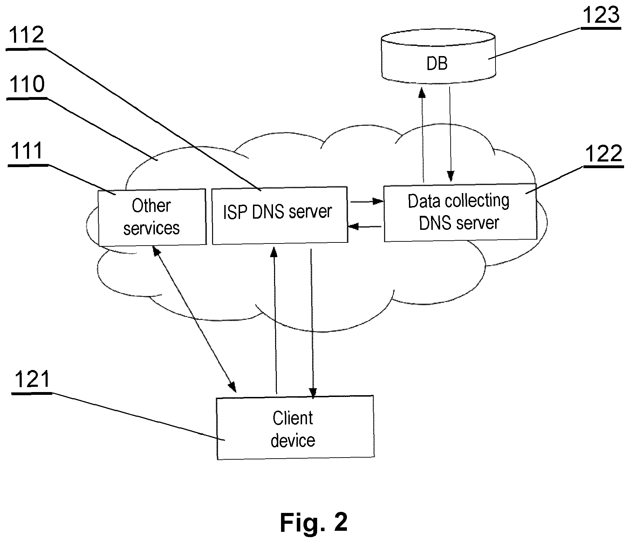

The second embodiment of the system as shown in Fig. 2 is equivalent to the first embodiment with the following differences.

The data collecting DNS server 122 is not configured as a DNS server directly at the client device 121, but at another DNS server 112, such an ISP DNS server that is configured as the DNS server directly at the client device 121. In that case, the data collecting DNS server 122 receives DNS queries related to the data collection domain name from the client device 121 via the other DNS server 112 and returns the IP address directly to the client device 121 or also via the other DNS server 112.

Fig. 3 shows schematically the method of operation of the system. The steps on the left are performed by the client device 121, while the steps on the right are performed by the server 122. First, in step 11, the client device generates data corresponding to the device module 230 in a form of a data string. This can be for example data corresponding to the measurements made by the module 230, other data generated by the module 230 or simply a current state of the module 230.

Next, in step 12, a data collection DNS query is formed in a form of a domain name string that contains the data string followed by a data collection domain name. The data collection domain name can be e.g. "dns.adbglobal.com" and it is the domain name corresponding to the data collection server 122. The data string contains the data to be collected by the server 122. It may further contain the client device identifier. Once the DNS query is formed, it is sent to the network controller 210 in step 13, such that the network controller 210 sends it to the DNS server to be resolved.

In step 14 the data collection server 122 configured as the DNS server receives the data collection DNS query. In step 15 it extracts the data string from the DNS query domain name string.

Optionally, the client device may, when forming the DNS query in step 12, encrypt the data to be sent and provide the encrypted data as the data string - in that case, step 15 may involve, apart from extraction of the data string, the decryption of the data string.

In step 16 the data collection server sends the data string and an identifier of the client device 121 to the data collection database 123. The client identifier may be extracted from the query or it can be the IP address from which the DNS query originated, depending on the system configuration. The data collection database 123 can be used for various purposes which are beyond the scope of the present application.

Next, the data collection server 122 may form 17 an IP address response depending on the content of the data string and sends it in step 18 to the client device 121.

The IP address response may be a simple acknowledgement or a command that is next interpreted by the client device 121 and executed. The IP address response type is defined by the values of the IP address, for example the acknowledgement can have a form of an IP address "1.1.1.1" and a command can have a form of an IP address "20.20.20.x", wherein "x" defines a type of command. Preferably, the IP address should be a special address reserved for system use such as not to be confused with an address of an actual other device in the network.

Furthermore, the IP address response may be in a form of a plurality of IP addresses, which may be useful to transmit a plurality of commands to the client device.

Upon receiving in step 19 the IP address response, the client device 121 may extract in step 20 response data from the IP address response and perform in step 21 an action depending on the extracted response data (wherein the action is defined according to the IP address - command converter 221).

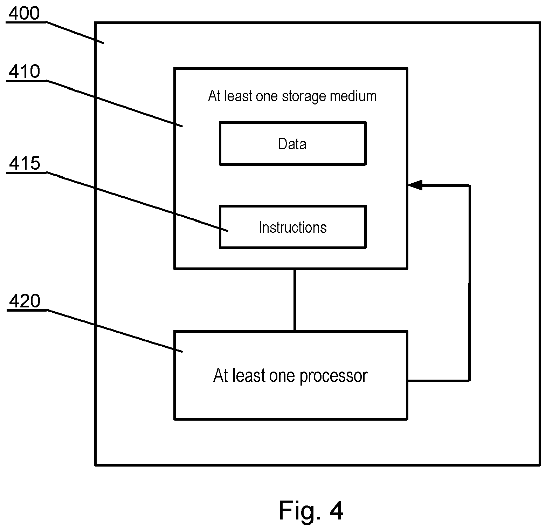

Fig. 4 shows a schematic illustration of an example embodiment of a structure of the client device 121 or the data collection server 122. They may contain a controller 400 that may include at least one non-transitory processor-readable storage medium 410 that stores at least one of processor-executable instructions 415 or data; and at least one processor 420 communicably coupled to the at least one non-transitory processor-readable storage medium 410. The at least one processor 420 may be configured to (by executing the instructions 415) perform the corresponding steps of the method of Fig. 3 (i.e. steps 11-13, 19-21 for the client device 121 or steps 14-18 for the server).

The following are non-limiting list of examples of use of the system, tailored to a client device in a form of a digital television decoder.

### First example

The client device is configured to send data corresponding to currently watched tv programs, if the program is watched for more than 5 minutes. In that case, the client device 121 may send the DNS query in a form of a string such as: live1.stb1.dns.adbglobal.com, wherein "live1" is a program identifier, "stb1" is a client device identifier (or an identifier of a module of that client device) and "dns.adbglobal.com" is the data collection domain name. The server device 122 responds by sending an acknowledgement response in a form of an IP address such as "1.1.1.1".

### Second example

The client device is configured to send data corresponding to currently watched tv programs, and the server device may ask for the source of that program. In that case, the client device 121 may send the DNS query in a form of a string such as: live1.stb1.dns.adbglobal.com, wherein "live1" is a program identifier, "stb1" is a client device identifier (or an identifier of a module of that client device) and "dns.adbglobal.com" is the data collection domain name. The server device 122 responds by sending a command in a form of an IP address such as "10.20.30.40" which is interpreted by the client device as a command to send a more detailed DNS query. Correspondingly, the client device sends a response such as "dvbs.stb1.dns.adbglobal.com" wherein "dvbs" identifies the source of the program (e.g. a satellite signal receiver). The server device 122 responds by sending an acknowledgement response in a form of an IP address such as "1.1.1.1".

### Third example

The client device is configured to send data corresponding to currently watched tv programs, and the server device may ask for the type and parameters of internet connection. In that case, the client device 121 may send the DNS query in a form of a string such as: live1.stb1.dns.adbglobal.com, wherein "live1" is a program identifier, "stb1" is a client device identifier (or an identifier of a module of that client device) and "dns.adbglobal.com" is the data collection domain name. The server device 122 responds by sending a command in a form of an IP address such as "20.20.20.20" which is interpreted by the client device as a command to send parameters of the internet connection. Correspondingly, the client device sends two responses such as "wifi.stb1.dns.adbglobal.com" wherein "wifi" identifies that the connection is over a Wi-Fi network and such as "60dbi.aes.wpa2.5ghz.pass_12345678.ssid_test.stb1.dns.adbglobal.com", which informs about the parameters of the Wi-Fi connection: ssid: test, password: 12345678, bandwidth: 5GHz, WPA2 AES, signal strength 60dBi. The server device 122 responds by sending an acknowledgement response in a form of an IP address such as "1.1.1.1".

### Fourth example

The battery-operated client device is configured to send data corresponding to its current temperature. In that case, the client device 121 may send the DNS query in a form of a string such as: 25c.thermometer1.dns.adbglobal.com, wherein "25c" identifies the value of the temperature as 25 degrees Celsius, and "thermomenter1" identifies which module of the device generated this data and "dns.adbglobal.com" is the data collection domain name. The server device 122 responds by sending a command to define the battery power level, such as "10.20.30.50". The client device 121 responds as "10.dns.adbglobal.com", which indicates that the battery level is 10 percent. The server device 122 responds by sending a command to switch to low power energy usage, such as "10.20.50.50". The device switches to low power mode. The DNS server may be further configured to send, via other communication channels (e.g. SMS or email), a message to the user of the device to power the device or replace the battery.

### Fifth example

The client device is configured to send data indicating that it is interested to learn about the most recent firmware version that can be installed at this client device and the server device may provide the most recent firmware version. In that case, the client device 121 may send the DNS query in a form of a string such as: pyta firmware_update.stb1.dns.adbglobal.com, wherein "firmware_update" is a request for the recent firmware version identifier, "stb1" is a client device identifier (or an identifier of a module of that client device) and "dns.adbglobal.com" is the data collection domain name. The server device 122 responds by sending a response in a form of an IP address such as "5.5.5.5" which indicates the current firmware version. In case the client device has an older version of firmware, it can initiate a firmware update procedure.

The presented solution makes the process of sending data via the DNS protocol more efficient than using additional dedicated messages. This makes the system particularly useful for low-resource client devices or networks with a large number of client devices wherein network bandwidth is limited.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A system for transmitting data using a DNS (Domain Name System) protocol, the system comprising:
- at least one client device (121);
- a data collection server (122) associated with a data collection domain name; and
- a data collection database (123);
- wherein the client device (121) comprises:
- at least one device module (230); and
- a device controller (220) configured to:
- generate (11) data corresponding to the device module (230) in a form of a data string;
- form (12) a data collection DNS query in a form of a domain name string that contains the data string followed by a data collection domain name; and
- send (13) the data collection DNS query to the network controller (210);
- and wherein the data collection server (122) is configured to:
- receive (14) the data collection DNS query; and
- extract (15) the data string from the DNS query domain name string.

2. The system according to claim 1, further comprising a data collection database (123), wherein the data collection server (122) is further configured to send (16) the data string and an identifier of the client device (121) to the data collection database (123).

3. The system according to any of previous claims, wherein the data collection server (122) is further configured to:
- form (17) an IP address response depending on the content of the data string;
- send (18) the IP address response to the client device (121).

4. The system according to claim 3, wherein the data collection server (122) is configured to form (17) an IP address response of at least one of the following types: an acknowledgement and a command.

5. The system according to claim 4, wherein the IP address response type is defined by the values of the IP address.

6. The system according to any of claims 3-5, wherein the device controller (220) of the client device (121) is further configured to receive the IP address response, extract (20) response data from the IP address response and perform (21) an action depending on the extracted response data.

7. The system according to any of previous claims, wherein the step of forming (12) the DNS query comprises encrypting the data to be sent and providing the encrypted data as the data string, and the step of extracting (15) the data string comprises decrypting of the data string.

8. A method for transmitting data between a client device (121) and a data collection server (122) having an IP (Internet Protocol) address, the method comprising:
- at the client device (121):
- generating (11) data corresponding to a device module (230) in a form of a data string;
- forming (12) a data collection DNS query in a form of a domain name string that contains the data string followed by a data collection domain name; and
- sending (13) the data collection DNS query to the network controller (210);
- at the data collection server (122) associated with the data collection domain name:
- receiving (14) the data collection DNS query; and
- extracting (15) the data string from the DNS query domain name string.

9. The method according to claim 8, further comprising, at the data collection server (122), sending (16) the data string and an identifier of the client device (121) to a data collection database (123).

10. The method according to any of claims 8-9, further comprising, at the data collection server (122), forming (17) an IP address response depending on the content of the data string and sending (18) the IP address response to the client device (121).

11. The method according to any of claims 8-10, wherein the step of forming (12) the DNS query comprises encrypting the data to be sent and providing the encrypted data as the data string, and the step of extracting (15) the data string comprises decrypting of the data string.
